# EUROPÄISCHE PATENTSCHRIFT

(11) **EP 3 679 120 B1**
(45) Veröffentlichungstag und Bekanntmachung des Hinweises auf die Patenterteilung: **21.09.2022**
(21) Anmeldenummer: 18769637.2
(22) Anmeldetag: 10.09.2018
(51) Int. Cl.: C12C 7/26, C12C 13/00, F25B 39/04

(54) **VORRICHTUNG UND VERFAHREN ZUR EFFIZIENTEN KÜHLUNG IN BRAUEREIEN, SOWIE DIE VERWENDUNG VON BIER DAFÜR**
DEVICE AND METHOD FOR EFFICIENT COOLING IN BREWERIES, AS WELL AS THE USE OF BEER THEREFOR
PROCÉDÉ ET DISPOSITIF POUR UN REFROIDISSEMENT EFFICACE DANS DES BRASSERIES, AINSI QUE L'UTILISATION DE BIERE DANS CE BUT

(30) Priorität: 08.09.2017 DE 102017215924
(43) Veröffentlichungstag der Anmeldung: 15.07.2020
(73) Patentinhaber: Krones AG, 93073 Neutraubling (DE)
(72) Erfinder: SCHNEID, Ralph, 93073 Neutraubling (DE); KAMMERLOHER, Helmut, 93073 Neutraubling (DE); OTTMANN, Norbert, 93073 Neutraubling (DE); ACHHAMMER, Simon, 93073 Neutraubling (DE); BUCHHAUSER, Ulrich, 93073 Neutraubling (DE)
(74) Vertreter: Grünecker Patent- und Rechtsanwälte PartG mbB
(86) Internationale Anmeldenummer: PCT/EP2018/074267
(87) Internationale Veröffentlichungsnummer: WO 2019/048662

(56) Entgegenhaltungen:
- WO-A1-2014/012527
- DE-A1-102010 042 765
- DE-U1- 9 103 802

## Beschreibung

Die vorliegende Erfindung betrifft ein Verfahren und eine Vorrichtung zur effizienten Kühlung in Brauereien und insbesondere zur Effizienzsteigerung von Kälteanlagen.

### Stand der Technik

Während der Bierherstellung in Brauereien muss wiederholt gekühlt werden. Beispielsweise wird das Bier nach dem Gärprozess im Allgemeinen zur Lagerung in einem Gär- und/oder Lagertank auf eine Filtrations-/Lagertemperatur von zum Beispiel -1 °C bis +4 °C abgekühlt. Aufgrund der vielen erforderlichen Kühlprozesse sind Kälteanlagen in der Brauerei von zentraler Bedeutung. Dabei gehört die Kälteerzeugung mit etwa 40 % Anteil, teilweise sogar bis zu 55 % Anteil zu den größten Stromverbrauchern in der Brauerei.

Nach der Lagerung wird das Bier aus den Gär- und/oder Lagertanks entnommen und einem Bierfilter zugeführt. Bei der Bierfiltration wird das Bier oft (meist in einem Wärmetauscher vor dem Eintritt in den Bierfilter) nochmals gekühlt, sodass das Bier bei möglichst kalten Temperaturen filtriert werden kann. Nach der Filtration wird das verkaufsfertige Bier in Drucktanks gelagert und anschließend in einer Abfüllanlage in Behälter, beispielsweise Flaschen, Dosen oder Fässer, zum Verkauf abgefüllt. Dabei erfolgt das Abfüllen im Allgemeinen mit kaltem Bier bei Filtrations-/Lagertemperatur, sodass sich das abgefüllte Bier im Behälter anschließend erwärmt. Dadurch geht einerseits die in dem Bier gespeicherte Kälte verloren, andererseits bildet sich an den Behältern Kondenswasser, das sich beispielsweise negativ auf eine Etikettierung der Behälter auswirkt. Es kann auch verkaufsfertiges Bier ohne Filtration (naturtrübes Bier, wie zum Beispiel Weizenbier, Zwicklbier, etc.) aus den Gär- und/oder Lagertanks entnommen werden und direkt in die Drucktanks zur anschließenden Abfüllung gelagert werden.

In der DE 10 2010 042 765 A1 und in der G 91 03 802.2 werden Kälteanlagen zur Erzeugung von Eiswasser beschrieben, wobei das erzeugte Eiswasser zum Abkühlen von Würze beziehungsweise Bier Verwendung findet. In der WO2014/012527 A1 wird die Abfüllung von Bier unter Einsatz eines Wärmetauschers beschrieben, der zwischen einem Lagertank und einer Abfüllvorrichtung vorgesehen ist.

Das Dokument DE9103802U1 offenbart eine Einrichtung zur Erzeugung von Eiswasser, insbesondere für Kühlzwecke im Bereich der Nahrungsmittelindustrie, die einen Behälter mit einem Zulauf für Wasser und einem Ablauf für Eiswasser aufweist.

Vor kurzem entwickelte Verfahren der Anmelderin gestatten es nunmehr, das verkaufsfertige Bier bei höheren Temperaturen als der Filtrations-/Lagertemperatur, beispielsweise bei 24 °C bis 26 °C und gemäß einer besonderen Ausprägung bis zu 35°C abzufüllen. Dabei kann nach dem Befüllen des Behälters ein Spanngas, insbesondere Kohlendioxid, in den Innenraum des Behälters geleitet werden, um ein übermäßiges Entbinden des im Füllprodukt gelösten Kohlendioxids zu verhindern bzw. ein erneutes Lösen des im Füllprodukt vorliegenden Kohlendioxids zu unterstützen. Gerade bei diesem Abfüllverfahren entfaltet die nachfolgend beschriebene Erfindung besondere Vorteile.

Der vorliegenden Erfindung liegt somit die Aufgabe zugrunde, die in dem gelagerten Bier gespeicherte Kühlkapazität sinnvoll zu nutzen. Ganz allgemein liegt der Erfindung die Aufgabe zugrunde, die Effizienz von Kälteanlagen, insbesondere derjenigen, die zur Kühlung in Brauereien eingesetzt werden, zu steigern und den Endenergiebedarf zu senken.

### Beschreibung der Erfindung

Die Erfindung ist in den unabhängigen Ansprüchen 1, 10 und 15 offenbart. Weitere Ausführungsbeispiele sind in den abhängigen Ansprüchen offenbart.

Die oben genannten Aufgaben werden gelöst durch ein Verfahren zum Betrieb einer Kälteanlage in einer Brauerei, welches das Fördern eines Kältemittels in einem Kreislauf der Kälteanlage mit wenigstens einem Verdampfer zum Verdampfen des Kältemittels und wenigstens einem Wärmeübertrager zum Kühlen des Kältemittels umfasst, wobei Bier, das in wenigstens einem Drucktank oder Gär- und/oder Lagertank gelagert wird, als Kälteträger beim Kühlen des Kältemittels eingesetzt wird.

Kälteanlagen, so wie sie in Brauereien eingesetzt werden, sind im Stand der Technik allgemein bekannt, sodass im Folgenden lediglich eine Kurzbeschreibung möglicher Kälteanlagen wiedergegeben ist. Es versteht sich, dass die beschriebenen Kälteanlagen durch im Stand der Technik bekannte und im Zusammenhang mit Brauereien verwendete weitere Vorrichtungen und Merkmale ergänzt werden können.

Die Kälteanlage bzw. Kältemaschine gemäß der vorliegenden Erfindung ist als Kompressionskälteanlage ausgebildet, bei der ein Kältemittel im Kreis geleitet wird, das abwechselnd Wärme bei niedriger Temperatur aufnimmt und bei höherer Temperatur wieder abgibt. Dabei findet ein abwechselndes Verdampfen und Kondensieren des Kältemittels in einem entsprechenden Verdampfer bzw. Kondensator statt.

In dem Kreislauf der Kälteanlage wird gasförmiges Kältemittel von einem Verdichter (in der Praxis häufig Kolbenkompressoren) verdichtet, wobei meist elektrische Energie eingesetzt wird. In dem nachgeschalteten Wärmeübertrager, d.h. Kondensator, Kühlturm oder dergleichen, kondensiert das Kältemittel, wobei es Wärme bei hoher Temperatur abgibt, entsprechend der bei dem hohen Druck ebenfalls hohen Kondensationstemperatur. Das flüssige Kältemittel kann dann zu einer Drosseleinrichtung, insbesondere in Form eines Expansionsventils, geleitet werden, wo sein Druck reduziert wird. In einem weiteren Wärmeübertrager, d.h. Verdampfer, nimmt das Kältemittel anschließend durch Verdampfen Wärme bei niedriger Temperatur auf, wodurch entweder das zu kühlende Objekt bzw. der zu kühlende Raum direkt gekühlt wird oder ein zwischengeschalteter Kälteträger gekühlt wird. Der Verdichter saugt das verdampfte Kältemittel wieder an und der Kreisprozess ist geschlossen.

Bei der indirekten Kühlung ist ein Zwischenkreislauf für ein Kälteträgermedium vorgesehen, der das zu kühlende Objekt bzw. den zu kühlenden Raum mit dem Verdampfer verbindet. In der Weise, wie der Kälteträger durch das zu kühlende Objekt bzw. den zu kühlenden Raum erwärmt wird, muss er im Verdampfer wieder abgekühlt werden. Dies geschieht durch Wärmeübertrag im Verdampfer von dem Kälteträger auf das Kältemittel.

Ein Kälteträger bzw. Kälteträgermedium ist hier und im Folgenden ein Kühlmittel, welches gemäß der beschriebenen Anwendung Wärme aufnimmt, ohne dabei zu verdampfen, oder bei der Wärmeaufnahme bei gleichem Druck verdampft. Als Kälteträger kommen in Brauereien beispielsweise frostsichere und nicht aggressive Kühlmittel in Betracht, insbesondere Glykol und chlorfreie Edelsole. Weitere mögliche Kälteträger sind inhibiertes Glykol, Ethylen-Glykol-Wasser (EWG), Propylen-Glykol-Wasser (PWG) oder auch Flüssigeis (Ice Slurry). Die genannten Kälteträger können dabei in dem Zwischenkreislauf zur Übertragung der Wärme von dem zu kühlenden Objekt auf das Kältemittel im Verdampfer eingesetzt werden.

Gemäß der vorliegenden Erfindung wird jedoch Bier als Kälteträger eingesetzt, wobei die Verwendung von Bier als Kälteträger zunächst auf die Aufnahme von Wärme aus dem Kältemittel in der Kälteanlage der Brauerei beschränkt ist. Es wird erfindungsgemäß kaltes Bier aus einem Gärund/oder Lagertank oder einem Drucktank oder nach der Bierfiltration als Kälteträger bzw. Kälteträgermedium eingesetzt.

Als Verdampfer kann der Wärmeübertrager beispielsweise als Steilrohrverdampfer, Röhrenkesselverdampfer, Rippenrohrverdampfer, Rohrschlangenverdampfer, Plattenverdampfer, Kühltasche oder in irgendeiner bekannten Bauart ausgeführt sein. Als Verdichter können insbesondere Hubkolbenverdichter, Schraubenverdichter, Rollkolbenverdichter, Drehkolbenverdichter und Turboverdichter verwendet werden. Entscheidend für die Effizienz der Kälteanlage ist dabei die Kälteziffer bzw. Arbeitszahl (COP - Coefficient of Performance), die das Verhältnis des Kältestromes zur eingesetzten Antriebsleistung (meist elektrisch) zeigt. Als Kondensator können die bekannten Typen verwendet werden, beispielsweise Rohrbündelkondensatoren oder luftgekühlte Kondensatoren, wobei wie unten genauer beschrieben eine Ausbildung des Kondensators gewählt wird, die eine direkte und/oder indirekte, vollständige oder teilweise Kühlung des Kältemittels durch das Bier als Kälteträgermedium gestattet. Die oben genannte Drosseleinrichtung kann beispielsweise unmittelbar am Eintritt des Verdampfers angebracht werden. Ein thermostatisches Expansionsventil, welches mechanisch oder elektronisch geregelt werden kann, kann hierbei verwendet werden.

Als Kältemittel können beispielsweise R717 Ammoniak, R290 Propan, Kohlenstoffdioxid, Butan, fluorierte Kohlenwasserstoffe (FKW), teilhalogenierte Fluorkohlenwasserstoffe (HFKW), wie zum Beispiel R134A (Tetrafluorethan), R507, R407C und R404A, sowie Kohlenwasserstoffe, wie Propylen, Isobutan und Propan, aber auch neuere Kältemittel mit niedrigem oder sehr niedrigem Global Warming Potential (GWP) verwendet werden. Neben Einstoffkältemittel können auch Kältemittelgemische zum Einsatz kommen. Hierbei unterscheidet man azeotrope Gemische von solchen mit Temperatur-Glide. Die Erfindung ist dabei nicht auf die hier genannten Kältemittel beschränkt.

Die Kälteanlage kann darüber hinaus bekannte Elemente wie Rohrleitungen, Pumpen, Ventile, Steuer- und Regelsysteme, Stromversorgung, Sensor- und Messeinrichtungen und dergleichen umfassen, welche der Übersichtlichkeit halber nicht näher beschrieben werden. Die Kälteanlage kann beispielsweise als einstufige Kälteanlage mit Abscheide- und Pumpenumlauf, als Kälteanlage mit Economiser, als Kälteanlage mit innerem Wärmeübertrager und/oder Erhitzer, oder als zwei- oder mehrstufige Kälteanlage mit entsprechend zwei oder mehr Verdichtern ausgebildet sein.

Gemäß einer Weiterbildung kann das Verfahren weiterhin das Fördern von Bier als Kälteträger aus wenigstens einem Gär- und/oder Lagertank oder Drucktank der Brauerei zu dem wenigstens einen Wärmeübertrager umfassen. Hierzu können entsprechende Rohrleitungen, Regelventile und/oder regelbare Pumpen vorgesehen sein, sodass ein Volumenstrom des Bieres in Abhängigkeit eines benötigten Kältestroms am wenigstens einen Wärmeübertrager mittels einer, beispielsweise als speicherprogrammierbare Steuerung ausgebildeten, Steuer- und/oder Regeleinheit geregelt werden kann. Das Bier kann dabei beispielsweise mit einer Temperatur im Bereich von -1 °C bis +4 °C, insbesondere der Filtrations-/Lagertemperatur, zu dem wenigstens einen Wärmeübertrager gefördert werden. In dem wenigstens einen Wärmeübertrager wird dieses zugeförderte Bier dann direkt oder indirekt auf eine für die Abfüllung noch geeignete Temperatur erwärmt, während gleichzeitig das Kältemittel abgekühlt wird. Des Weiteren kann das Bier auch ohne Regelung, mit konstantem Volumenstrom dem wenigstens einem Wärmeübertrager zugeführt werden.

Das Bier kann an dem wenigstens einen Wärmeübertrager direkt und/oder indirekt das Kältemittel kühlen. Dies ist so zu verstehen, dass die Übertragung von Wärmeenergie aus dem Kältemittel auf das Bier direkt, d.h. ohne zwischengeschaltetes Kühlmedium, beispielsweise über einen Sicherheitswärmetauscher, und/oder indirekt, d.h. mit zwischengeschaltetem Kühlmedium, erfolgen kann. Eine direkte Kühlung ist beispielsweise dadurch realisierbar, dass das Bier als Kälteträger in dem Wärmeübertrager beispielsweise im Gegenstrom oder Gleichstrom oder Kreuzstrom zum Kältemittel geführt wird, wobei mindestens eine Wand des Wärmeübertragers das Kältemittel von dem Bier trennt. Die spezielle Art der Wärmeübertragung hängt dabei von der speziellen Ausbildung des Wärmeübertragers ab. Bei der direkten Kühlung wird jedoch kein weiteres flüssiges oder gasförmiges Kühlmedium eingesetzt, auf das zunächst die Wärme des Kältemittels übertragen würde, und von dem anschließend die übertragene Wärme an das Bier abgegeben würde. Aus sicherheitstechnischen Aspekten kann auch ein Wärmetauscher mit Sicherheits-Doppelrohren bzw. mit einer doppelten Wandung o.ä. eingesetzt werden, bei dem die Wärmeübertragung durch Wärmeleitung der sich berührenden Rohre oder Platten erfolgt und dessen Kontaktstellen mit Rillen o.ä. ausgebildet sind, die im Falle einer Leckage einer Wandung, ein Medium ins Freie entweichen lassen können. Auf diese Weise kann zuverlässig verhindert werden, dass eventuell giftiges Kältemittel in das Bier gelangt. Zusätzlich oder alternativ kann das Bier unter höherem Druck als das Kältemittel im Wärmeübertrager geführt werden, sodass bei einer Leckage lediglich Bier in das Kältemittel eintritt.

Der Einsatz eines weiteren flüssigen oder gasförmigen Kühlmediums ist bei der erwähnten indirekten Kühlung vorgesehen. Entsprechend kann der wenigstens eine Wärmeübertrager ausgebildet sein, indem das weitere Kühlmedium durch eine Wand bzw. Wandung von dem Kältemittel getrennt ist und das Bier durch eine Wandung bzw. Wand von dem weiteren Kühlmedium getrennt ist. Insbesondere kann ein zweistufiger Wärmeübertrager vorgesehen sein, bei dem das weitere Medium zunächst an dem Bier und anschließend an dem Kältemittel vorbeigeführt wird (siehe weiter unten).

Die Kombination aus direkter und indirekter Kühlung ist beispielsweise durch Vorsehen zweier getrennter Wärmeübertrager realisierbar, wobei einer der Wärmeübertrager der direkten Kühlung dient und der andere Wärmeübertrager der indirekten Kühlung dient.

Bei dem oben erwähnten weiteren Kühlmedium kann es sich beispielsweise auch um zugeführte Umgebungsluft handeln, die durch das Bier als Kälteträger vorgekühlt wird, bevor sie in einen Bereich des Wärmeübertragers geführt wird, in dem der Wärmeübertrag von dem Kältemittel stattfindet. Die vorgekühlte Luft kühlt somit über einen als Luftkühler ausgebildeten Wärmeübertrager, wie er prinzipiell im Stand der Technik bekannt ist, das Kältemittel. Anders als im Stand der Technik bekannt, wird die Luft jedoch über Wärmeaustausch mit dem kalten Bier vorgekühlt, sodass Umgebungsluft mit einer niedrigeren und im besten Fall konstanten Eingangstemperatur von, je nach Prozessbedingungen der Kälteanlage, 10 °C bis 25 °C zur Kühlung des Kältemittels verwendet werden kann.

Auf diese Weise trägt die vorliegende Erfindung dazu bei, dass die Kälteanlage unabhängig von der Jahreszeit mit einer niedrigeren und im besten Fall konstanten Verflüssigungstemperatur betrieben werden kann. Somit wird ein Absinken des COP durch höhere Kondensationstemperaturen, wie sie zum Beispiel im Sommer vorliegen, verhindert. Liegt die Umgebungsluft bereits mit einer Temperatur unterhalb des gewünschten Temperaturbereichs vor, so kann die Vorkühlung mit Bier ausgesetzt werden, indem beispielsweise die Förderung von Bier durch eine Kühlschleife des Wärmeübertragers ausgesetzt wird. Hierzu kann ein Temperatursensor zum Messen der Temperatur der Umgebungsluft vorgesehen sein, wobei die zuvor erwähnte Steuer- und/oder Regeleinheit eine regelbare Förderpumpe für das zugeförderte Bier bei Unterschreiten einer vorgegebenen Grenztemperatur herunterregelt bzw. stoppt. Überschreitet die gemessene Temperatur die Grenztemperatur, beispielsweise 25 °C, so kann die oben beschriebene Vorkühlung der Luft eingeleitet werden, indem eine Förderrate der Förderpumpe entsprechend angepasst wird. Bei Temperaturen der Umgebungsluft unterhalb des gewünschten Temperaturbereichs kann das Bier dennoch verwendet werden, um das Kältemittel bereits vor Eingang in den Wärmeübertrager, beispielsweise durch einen vorgeschalteten weiteren Wärmeübertrager, vorzukühlen. Auf die oben beschriebene Weise kann die Umgebungsluft abgekühlt werden, bevor sie durch die Kondensationswärme des kondensierenden Kältemittels erwärmt werden kann. Insbesondere kann, wie bereits erwähnt, der wenigstens eine Wärmeübertrager am Kondensator der Kälteanlage angeordnet sein oder als Kondensator bzw. als Teil des Kondensators ausgebildet sein. Durch die Vorkühlung der Luft mittels des Bieres als Kälteträger kann das Kältemittel weiter abgekühlt, bzw. die Verflüssigungstemperatur weiter abgesenkt werden als in dem im Stand der Technik bekannten Wärmeübertrager mit Luftkühlung.

Gemäß einer speziellen Weiterbildung kann dasselbe Bier zuerst zur direkten Kühlung des Kältemittels an einem ersten Wärmeübertrager und anschließend zur Vorkühlung der Umgebungsluft an einem zweiten Wärmeübertrager eingesetzt werden. Anschließend oder alternativ zur Vorkühlung der Umgebungsluft kann das Bier zu dem oben erwähnten zusätzlichen Wärmeübertrager im Vorlauf zum zweiten Wärmeübertrager geführt werden, von wo aus das erwärmte Bier zum Abfüller geführt wird. In diesem Fall kann der zweite Wärmeübertrager kleiner ausgelegt werden. In einem besonderen Fall kann der zweite Wärmeübertrager auch durch den zusätzlichen Wärmeübertrager ersetzt werden, sodass anstelle der Kühlung des Kältemittels mit Luft eine direkte Kühlung mit Bier erfolgt. Anders ausgedrückt sind wenigstens zwei Wärmeübertrager zum Kühlen des Kältemittels mittels Bieres vorgesehen, wobei das Bier zunächst durch einen ersten Wärmeübertrager gefördert wird, in dem es Wärme unmittelbar von dem Kältemittel aufnimmt, um anschließend durch einen zweiten Wärmeübertrager zu der oben beschriebenen indirekten Kühlung des Kältemittels, d.h. zur Vorkühlung der Umgebungsluft, gefördert zu werden. Entsprechend kann das Kältemittel zunächst durch den zweiten Wärmeübertrager gefördert werden, wo es von der vorgekühlten Umgebungsluft abgekühlt wird, und dabei möglicherweise kondensiert, um anschließend durch den ersten Wärmeübertrager gefördert zu werden, wo es von dem Bier als Kälteträger weiter abgekühlt wird. Beispielsweise kann das Kältemittel beim Durchgang durch den zweiten Wärmeübertrager auf eine Temperatur von ca. 20 °C oder darunter abgekühlt werden, während es beim darauffolgenden Durchgang durch den ersten Wärmeübertrager auf eine Temperatur von ca. 4 °C oder darunter abgekühlt wird (man spricht hier auch von Unterkühlung). Im ersten Wärmeübertrager kann das Kältemittel insbesondere im Gegenstrom zum Bier geführt werden. Das Bier kann dabei insbesondere mit der Filtrations-/Lagertemperatur in den ersten Wärmeübertrager eintreten. Dabei kann das kalte Bier beispielsweise um 1 K bis 3 K erwärmt werden.

Gemäß einer Weiterbildung kann Bier, insbesondere nach der direkten Kühlung (bzw. Unterkühlung) des Kältemittels, d.h. nach dem Durchgang durch den ersten Wärmeübertrager, zur Eiswassererzeugung aus Kaltwasser an einem dritten Wärmeübertrager eingesetzt werden. Hierzu kann das Bier beispielsweise im Gegenstrom zum Kaltwasser durch den dritten Wärmeübertrager geführt werden, der als Flüssigkeitsrekuperator, beispielsweise als Plattenwärmeübertrager, Spiralwärmeübertrager, Rohrwärmeübertrager bzw. Rohrbündelwärmeübertrager, U-Rohrwärmeübertrager, Mantelrohrwärmeübertrager oder ähnliche ausgebildet sein kann. Als Kaltwasser ist hier und im Folgenden insbesondere Wasser in einer Brauerei zu verstehen, das eine Höchsttemperatur von 35 °C, bevorzugt eine Temperatur im Bereich von 10 °C bis 20 °C, besitzt. Als Eiswasser ist hier und im Folgenden insbesondere Wasser in einer Brauerei zu verstehen, das in jedem Fall eine Temperatur unter der Kaltwassertemperatur der jeweiligen Brauerei aufweist, meist jedoch höchstens 10 °C, bevorzugt höchstens 8 °C, aufweist. Das Kaltwasser kann beispielsweise als Frischwasser zugeführt werden, wobei das erzeugte Eiswasser anschließend als Kälteträger für andere Kühlprozesse in der Brauerei zur Verfügung steht.

Nach dem Durchgang durch den dritten Wärmeübertrager kann das Bier insbesondere eine Temperatur von 12 °C bis 20 °C aufweisen. Das so erwärmte Bier kann danach entweder unmittelbar abgefüllt werden oder wie oben beschrieben dem zweiten Wärmeübertrager zur Vorkühlung der Umgebungsluft zugeführt werden. Das Bier kann somit nach Durchgang durch den dritten Wärmeübertrager zur indirekten Kühlung des Kältemittels verwendet werden. In diesem Fall erfolgt die Abfüllung des Bieres erst nach Durchgang durch den zweiten Wärmeübertrager. Somit kann das im dritten Wärmeübertrager auf beispielsweise 15 °C erwärmte Bier im zweiten Wärmeübertrager durch Vorkühlung der Umgebungsluft weiter, beispielsweise auf 20 °C erwärmt werden, wobei die Abfüllung mit 20 °C Biertemperatur erfolgt. In dieser Variante durchläuft das kalte Bier von den Gär- und/oder Lagertanks oder Drucktanks somit beispielsweise erst einen Flüssigkeitsrekuperator zum direkten Kühlen flüssigen Kältemittels unter hohem Druck, anschließend einen Flüssigkeitsrekuperator zum Erzeugen von Eiswasser, und schließlich einen als Kondensator ausgebildeten Wärmeübertrager zum Vorkühlen der Umgebungsluft, wobei sich das kalte Bier sukzessive auf die Abfülltemperatur von beispielsweise 20 °C erwärmt. Die im gelagerten Bier gespeicherte Kühlkapazität wird somit optimal zur Effizienzsteigerung der verwendeten Kälteanlage eingesetzt.

Gemäß einer Weiterbildung kann das Verfahren zusätzlich eine Kühlung des Kältemittels mittels Kohlendioxids, insbesondere nach der Kühlung des Kältemittels mittels des Bieres, umfassen. In Brauereien wird Kohlendioxid häufig benötigt, beispielsweise um eine Nachkarbonisierung von abzufüllendem Bier durchzuführen sowie Rohre oder Behälter mit Kohlendioxid zu befluten. Hierzu wird das Kohlendioxid im Allgemeinen im gasförmigen Zustand benötigt. Aus logistischen Gründen wird Kohlendioxid in Brauereien jedoch im Allgemeinen flüssig gelagert, beispielsweise bei etwa -25 °C. Somit muss das flüssige Kohlendioxid vor den oben genannten Verwendungen zunächst verdampft werden. Gemäß der vorliegenden Erfindung kann die im flüssigen Kohlendioxid gespeicherte Kälte vorteilhaft verwendet werden, um das mittels Bier bereits vorgekühlte Kältemittel weiter abzukühlen. Beispielsweise kann Kältemittel nach dem Durchgang durch den oben beschriebenen direkten Wärmeübertrager mit einer Temperatur von 2 °C bis 7 °C in einen weiteren Wärmeübertrager geführt werden, wo es von dem flüssigen Kohlendioxid weiter abgekühlt wird, beispielsweise auf eine Temperatur von unter 0 °C, beispielsweise -5 °C. Dabei verdampft das flüssige Kohlendioxid und kann anschließend wie oben beschrieben verwendet werden. Das somit abgekühlte Kältemittel kann anschließend über eine Drosseleinrichtung entspannt werden und im Verdampfer zum Kühlen des zu kühlenden Objektes oder eines Kälteträgers, wie beispielsweise Glykol, verwendet werden. Das flüssige Kohlendioxid kann dabei wie üblich im Gegenstrom oder auch im Gleichstrom oder Kreuzstrom zum Kältemittel durch den Wärmeübertrager geführt werden. Gemäß einer Weiterbildung kann das Verfahren weiterhin ein Abfüllen des Bieres in Behälter oder Gebinde nach Durchgang durch die Kälteanlage bei einer Temperatur von höchstens 35 °C, bevorzugt höchstens 26 °C umfassen. Nachdem das aus dem Gär -und/oder Lagertank stammende kalte Bier seine gespeicherte Kälte in den oben beschriebenen Wärmeübertragern abgegeben hat, indem es Wärme aufgenommen hat, besitzt es eine Temperatur von beispielsweise 15 °C bis 35 °C. Neuere Abfüllanlagen können Bier auch bei diesen Temperaturen ohne wesentlichen Qualitätsverlust in Flaschen oder andere Gebinde abfüllen.

Durch einzelne oder alle der oben beschriebenen Schritte wird der (elektrische) Energiebedarf der Kälteanlage, der insbesondere im Verdichter aufgewendet werden muss, erheblich gesenkt. Somit wird die im gelagerten Bier gespeicherte Kälte sinnvoll eingesetzt, um den Energiebedarf der Kälteanlage einer Brauerei zu reduzieren.

Die oben genannten Aufgaben werden auch durch eine Kälteanlage nach Anspruch 10 zum Einsatz in einer Brauerei gelöst, die einen Verdampfer zum Verdampfen des Kältemittels und wenigstens einen Wärmeübertrager zum Kühlen des Kältemittels umfasst, wobei eine Zuführeinrichtung für Bier zu dem wenigstens einen Wärmeübertrager vorgesehen ist, und wobei die Zuführeinrichtung und der wenigstens eine Wärmeübertrager derart ausgebildet sind, dass das Bier als Kälteträger beim Kühlen des Kältemittels einsetzbar ist.

Dabei können dieselben Variationen und Weiterbildungen, die oben im Zusammenhang mit dem erfindungsgemäßen Verfahren zum Betrieb einer Kälteanlage beschrieben wurden, auch auf die Kälteanlage angewendet werden. Insbesondere können die oben beschriebenen weiteren Elemente der Kälteanlage sowie die möglichen Ausbildungen des Verdampfers, des wenigstens einen Wärmeübertragers, des Kältemittels, sowie eines möglichen Verdichters Anwendung finden. Darüber hinaus kann ein Zwischenkreis mit einem der oben beschriebenen Kälteträger mit dem Verdampfer verbunden sein, um das zu kühlende Objekt bzw. den zu kühlenden Raum zu kühlen.

Die Zuführeinrichtung kann wie bereits oben erwähnt die erforderlichen Rohrleitungen, Ventile und/oder Pumpen aufweisen. Insbesondere können ein oder mehrere Regelventile sowie eine oder mehrere regelbare Pumpen vorgesehen sein, welche von einer Steuer- und/oder Regeleinheit geregelt werden können, um die Förderung von kaltem Bier zu dem wenigstens einen Wärmeübertrager zum Kühlen des Kältemittels in Abhängigkeit von einem gewünschten Kältestrom zu regeln. Hierzu können wie oben erwähnt weitere Sensoren und Sonden vorgesehen sein, beispielsweise ein Temperatursensor zum Bestimmen der Temperatur der Umgebungsluft, eine oder mehrere Temperatursensoren zum Bestimmen der Temperatur des Kältemittels an verschiedenen Stellen des Kreislaufs der Kälteanlage, Strömungssensoren zum Bestimmen von Volumenströmen des Kältemittels sowie der Umgebungsluft bzw. des Bieres, sowie Temperatursensoren zum Bestimmen der Temperatur des Bieres vor bzw. nach Durchgang durch die jeweiligen Wärmeübertrager. Die ermittelten Messwerte können über Kabelverbindung oder kabellos über Funk an die Steuer- und/oder Regeleinheit übermittelt werden, die aus den übermittelten Daten in Kombination mit möglichen Konfigurationseinstellungen die Regelventile und/oder Pumpen regelt. Die Steuer- und/oder Regeleinheit kann beispielsweise als speicherprogrammierbare Steuereinheit ausgebildet sein und eine Prozessoreinheit, beispielsweise eine CPU oder GPU, umfassen.

Die Zuführeinrichtung kann insbesondere einen oder mehrere Gär- und/oder Lagertanks oder Drucktanks einer Brauerei mit dem wenigstens einen Wärmeübertrager fluidisch verbinden. Dabei sind die Zuführeinrichtung und der wenigstens eine Wärmeübertrager derart ausgebildet, dass das Bier als Kälteträger beim Kühlen des Kältemittels eingesetzt ist.

Beispielsweise kann der wenigstens eine Wärmeübertrager wie oben beschrieben einen ersten Wärmeübertrager, der für einen direkten Wärmeaustausch zwischen dem Kältemittel und dem Bier ausgebildet ist, und/oder einen zweiten Wärmeübertrager umfassen, der dazu ausgebildet ist, zugeführte Umgebungsluft mit dem Bier als Kälteträger vorzukühlen, wobei der Wärmeaustausch zwischen dem Kältemittel und der vorgekühlten Umgebungsluft stattfindet. Der zweite Wärmeübertrager kann beispielsweise einen ersten Abschnitt aufweisen, in dem ein direkter Wärmeaustausch zwischen dem über die Zuführeinrichtung zugeförderten Bier und zugeförderter Umgebungsluft stattfindet, wodurch die zugeförderte Umgebungsluft vorgekühlt wird. Bezüglich der Strömung der Umgebungsluft stromabwärts von dem ersten Abschnitt kann der zweite Wärmeübertrager einen zweiten Abschnitt aufweisen, der wie im Stand der Technik bekannt als luftgekühlter Wärmeübertrager für das Kältemittel ausgebildet ist. Die Umgebungsluft kann somit, beispielsweise mittels eines Ventilators, der Umgebung entnommen, über den ersten und zweiten Abschnitt gefördert und anschließend an die Umgebung zurückgegeben werden. Ergänzend kann der wenigstens eine Wärmeübertrager einen zusätzlichen Wärmeübertrager stromaufwärts von dem zweiten Wärmeübertrager aufweisen, durch den das Bier, insbesondere nach Durchgang durch den ersten und optional zweiten Wärmeübertrager, geführt wird. Somit kann mittels des Bieres im zusätzlichen Wärmeübertrager bereits eine Vorkühlung des Kältemittels vor Eintritt in den zweiten Wärmeübertrager erfolgen. Entsprechende Rohrleitungen und Ventile können hierzu und insbesondere zur Umgehung des zweiten Wärmeübertragers vorgesehen sein. Von dem zusätzlichen Wärmeübertrager kann das so erwärmte Bier zu einer Abfüllanlage gefördert werden.

Beispielsweise kann das Bier im ersten Abschnitt über eine Kühlschlange durch einen Kanal für die geförderte Umgebungsluft geführt werden, wobei das zu kühlende Kältemittel über eine weitere Kühlschlange durch denselben Kanal stromabwärts von dem ersten Abschnitt im zweiten Abschnitt geführt werden kann. Eine Vielzahl alternativer Weiterbildungen, beispielsweise als Plattenwärmeübertrager, Spiralwärmeübertrager, Rohrwärmeübertrager bzw. Rohrbündelwärmeübertrager, U-Rohrwärmeübertrager, Mantelrohrwärmeübertrager oder ähnliche sind für den zweiten Wärmeübertrager bzw. für dessen ersten und/oder zweiten Abschnitt denkbar.

Der erste Wärmeübertrager für den direkten Wärmeaustausch zwischen dem Kältemittel und dem Bier kann insbesondere als Flüssigkeitsrekuperator gemäß einer der oben erwähnten Weiterbildungen von Flüssigkeitsrekuperatoren ausgebildet sein, wobei das Bier von der Zuführeinrichtung im Gegenstrom oder Gleichstrom oder Kreuzstrom zum Kältemittel durch den ersten Wärmeübertrager geführt wird.

Gemäß einer speziellen Weiterbildung kann die Zuführeinrichtung derart ausgebildet sein, dass das zugeführte Bier erst den ersten Wärmeübertrager und anschließend den zweiten Wärmeübertrager durchströmt. In diesem Fall verbindet die Zuführeinrichtung somit einen oder mehrere Gär- und/oder Lagertanks oder Drucktanks mit dem ersten Wärmeübertrager und des Weiteren den ersten Wärmeübertrager mit dem zweiten Wärmeübertrager. Anders ausgedrückt verbindet die Zuführeinrichtung einen Auslass des ersten Wärmeübertragers für Bier mit einem Einlass des zweiten Wärmeübertragers für Bier. Auf diese Weise kann wie oben beschrieben die im gelagerten Bier gespeicherte Kühlkapazität nacheinander zum sukzessiven Kühlen des Kältemittels im zweiten Wärmeübertrager und im ersten Wärmeübertrager eingesetzt werden.

Gemäß einer Weiterbildung kann die Kälteanlage weiterhin einen dritten Wärmeübertrager, insbesondere bezüglich der Strömung des Bieres zwischen dem ersten und dem zweiten Wärmeübertrager, umfassen, der dazu ausgebildet ist, zugeführtes Kaltwasser durch Wärmeübertragung auf das Bier in Eiswasser umzuwandeln. Der dritte Wärmeübertrager kann dabei als Flüssigkeitsrekuperator gemäß einer der zuvor genannten Weiterbildungen ausgebildet sein. Das zugeführte Kaltwasser kann insbesondere im Gegenstrom oder Gleichstrom oder Kreuzstrom zum Bier geführt werden. Das Kaltwasser kann über geeignete Zuführleitungen aus einem an sich bekannten Kaltwassersystem oder Frischwasseranschluss der Brauerei zugeführt werden. Das zu Eiswasser abgekühlte Kaltwasser kann anschließend einem an sich bekannten Eiswassersystem, insbesondere einem Eiswassertank, der Brauerei zugeführt werden. Der dritte Wärmeübertrager kann insbesondere zwischen dem ersten und dem zweiten Wärmeübertrager angeordnet sein, wobei die zuvor erwähnte Zuführeinrichtung den ersten Wärmeübertrager mit dem dritten Wärmeübertrager fluidisch verbindet und den dritten Wärmeübertrager mit dem zweiten Wärmeübertrager fluidisch verbindet, sodass das gelagerte Bier zuerst durch den ersten Wärmeübertrager, anschließend durch den dritten Wärmeübertrager und schließlich durch den zweiten Wärmeübertrager gefördert werden kann.

Gemäß einer weiteren Weiterbildung kann die Kälteanlage weiterhin einen vierten Wärmeübertrager, insbesondere bezüglich der Strömung des Kältemittels stromabwärts von dem ersten Wärmeübertrager, umfassen, der dazu ausgebildet ist, das Kältemittel mittels zugeführten Kohlendioxids zu kühlen. Der vierte Wärmeübertrager kann als Flüssigkeitsrekuperator nach einer der zuvor genannten Weiterbildungen oder als Verdampfer für das flüssige Kohlendioxid gemäß einer der zuvor beschriebenen Weiterbildungen ausgebildet sein. Dabei kann der vierte Wärmeübertrager in dem Kreislauf der Kälteanlage für das Kältemittel insbesondere stromabwärts von dem ersten Wärmeübertrager angeordnet sein, wobei entsprechende Leitungen einen Ausgang des ersten Wärmeübertragers für das Kältemittel mit einem Eingang des vierten Wärmeübertragers für das Kältemittel verbinden können. Des Weiteren können erforderliche Zuführleitungen vorgesehen sein, mittels derer flüssiges Kohlendioxid aus einer Verflüssigungsanlage oder einem Speicher für Kohlendioxid zu dem vierten Wärmeübertrager gefördert werden kann. Nach Durchgang durch den vierten Wärmeübertrager kann das Kohlendioxid insbesondere in gasförmiger Form vorliegen, wobei geeignete Abführleitungen vorgesehen sein können, um das nunmehr gasförmige Kohlendioxid zu entsprechenden Verbrauchern, beispielsweise einem Karbonisierer der Brauerei, zu fördern.

Die oben genannten Aufgaben werden auch durch die Verwendung von in wenigstens einem Gär- und/oder Lagertank oder Drucktank gelagertem Bier zur Kühlung eines Kältemittels einer Kälteanlage gemäß einer beliebigen der oben beschriebenen Weiterbildungen zum Einsatz kommen kann. Durch die Verwendung von Bier bei Filtrations-/Lagertemperatur als Kälteträger zur direkten und/oder indirekten Kühlung des Kältemittels einer Kälteanlage wird die in dem gelagerten Bier gespeicherte Kälte sinnvoll zur Effizienzsteigerung der Kälteanlage genutzt.

Dabei können dieselben Variationen und Weiterbildungen, die oben im Zusammenhang mit dem erfindungsgemäßen Verfahren und der erfindungsgemäßen Kälteanlage beschrieben wurden, auch auf die Verwendung von Bier zur Kühlung eines Kältemittels einer Kälteanlage angewendet werden. Insbesondere kann das gelagerte Bier in mehreren Wärmeaustauschschritten zur sukzessiven Kühlung des Kältemittels verwendet werden, wobei das bereits teilweise erwärmte Bier zusätzlich zur Eiswassererzeugung aus Kaltwasser verwendet werden kann.

Die vorliegende Erfindung gestattet es somit die in gelagertem Bier gespeicherte Kälte wiederzuverwenden, um eine erforderliche Kühlung des Kältemittels in einer Kälteanlage einer Brauerei teilweise über Wärmeaustausch mit dem Bier durchzuführen. Dabei wird die Effizienz der verwendeten Kälteanlage durch eine Erhöhung des Kältestromes im Verhältnis zur eingesetzten Verdichtungsenergie, die meist durch elektrische Energie bereitgestellt wird, erheblich gesteigert. Der Kältestrom der Kälteanlage kann anschließend wieder zum Abkühlen von Bier, beispielsweise von Gärtemperatur auf Lager-/Filtrationstemperatur, verwendet werden. Somit tragen die beschriebenen Verfahren und Vorrichtungen zur Gesamteinsparung an Energie in einer Brauerei bei.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen.

Alle technische Merkmale von zumindest einem der unabhängigen Ansprüche 1, 10 und 15 sind obligatorisch offenbart in jedem Ausführungsbeispiel der vorliegenden Erfindung.

Figur 1 zeigt eine schematische Darstellung der Verwendung von Bier als Kälteträger in einer Brauerei gemäß der vorliegenden Erfindung.

Figur 2zeigt eine schematische Darstellung einer Kälteanlage gemäß der vorliegenden Erfindung.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

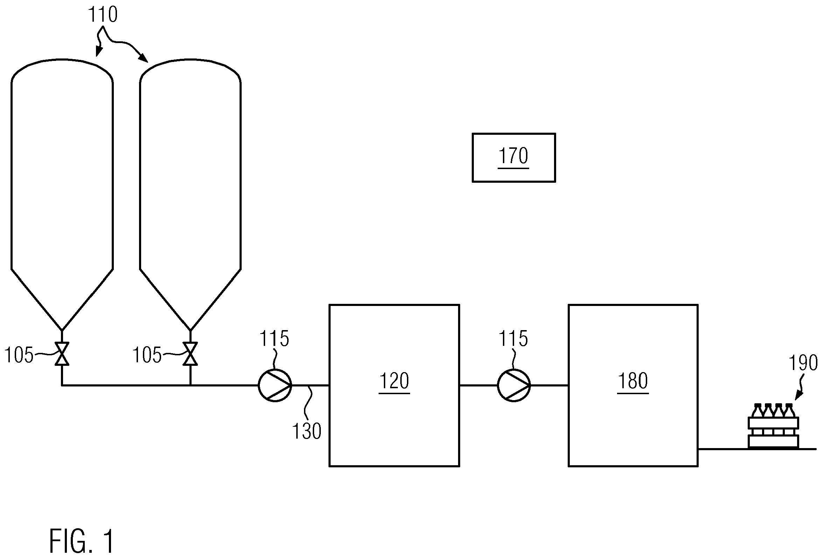

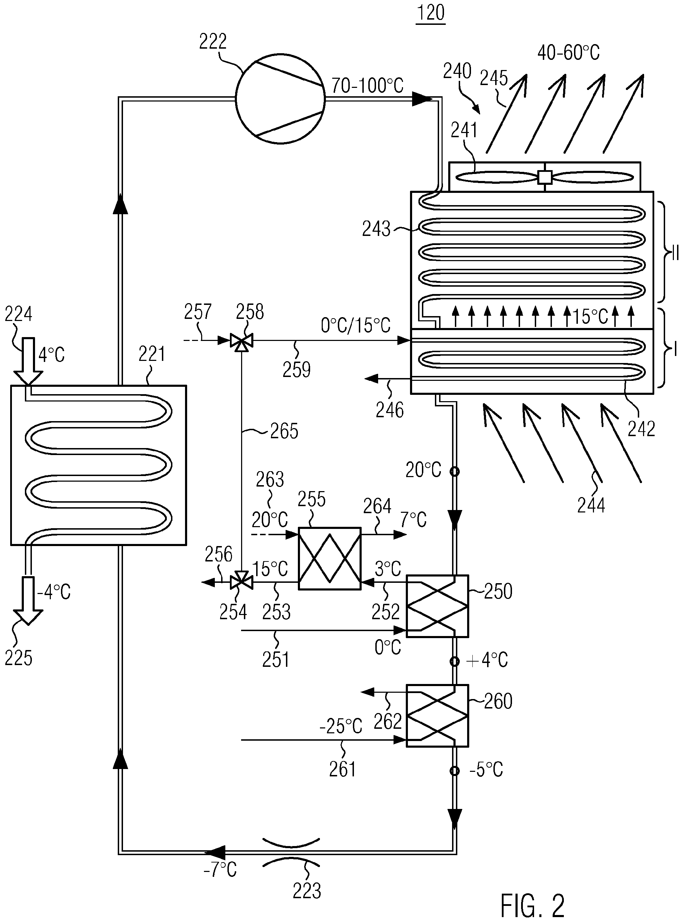

Figur 1 stellt eine Prinzipskizze für die Verwendung von Bier als Kälteträger in einer Brauerei gemäß der vorliegenden Erfindung dar. Exemplarisch sind in dieser Figur zwei Gär- und/oder Lagertanks oder Drucktanks 110 dargestellt, aus denen das bei Filtrations-/Lagertemperatur gelagerte Bier über eine Zuführeinrichtung 130 einer Kälteanlage 120 der Brauerei zugeführt wird. Exemplarisch sind in der Figur zwei Regelventile 105 sowie eine regelbare Pumpe 115 als Teil der Zuführeinrichtung 130 dargestellt, welche von einer Steuer- und/oder Regeleinheit 170 in Abhängigkeit von einem gewünschten Volumenstrom an Bier zur Kälteanlage 120 geregelt bzw. gesteuert werden. Des Weiteren kann das Bier aber auch ohne Regelung, mit konstantem Volumenstrom der Kälteanlage 120 zugeführt werden. Die Kälteanlage 120 ist in der Figur 1 lediglich als Block dargestellt und wird im Folgenden im Zusammenhang mit der Figur 2 genauer beschrieben.

Das in der Kälteanlage 120 nach Wärmeaustausch mit dem Kältemittel der Kälteanlage erwärmte Bier kann von einer weiteren Förderpumpe 115 zu einer Abfüllanlage 180 gefördert werden, wo das Bier bei einer Temperatur von beispielsweise 20 °C in Gebinde 190 abgefüllt wird. Auch die Förderpumpe 115 kann von der Steuer- und/oder Regeleinheit 170 gesteuert werden. Da Abfüllanlagen im Stand der Technik allgemein bekannt sind, wird hier auf eine detaillierte Beschreibung der Abfüllanlage 180 verzichtet.

Eine exemplarische, nicht limitierende Weiterbildung einer Kälteanlage gemäß der vorliegenden Erfindung ist in Figur 2 gezeigt. Dabei zeigt die Figur 2 die Gesamtheit der möglichen Kombinationen von Wärmeübertragern zur thermischen Verwertung der in gelagertem Bier gespeicherten Kühlkapazität. Es versteht sich jedoch, dass wie oben beschrieben lediglich einzelne Wärmeübertrager oder Untergruppen der in der Figur 2 dargestellten Wärmeübertrager in der Kälteanlage 120 vorgesehen sein können.

Die in der Figur 2 dargestellte Kälteanlage 120 umfasst die an sich bekannten Elemente eines Verdampfers 221, eines Verdichters 222, eines Kondensators 240 und einer Drosseleinrichtung 223, sowie die diese Elemente verbindenden Rohrleitungen. An den jeweiligen Zu- und Ableitungen der Elemente sind exemplarisch Temperaturen angegeben, die einem beispielhaften Betrieb der dargestellten Kälteanlage 120 entsprechen. Es versteht sich jedoch, dass die angegebenen Temperaturen lediglich der Illustration der vorliegenden Erfindung, aber nicht der Einschränkung dienen sollen.

Gemäß der dargestellten, nicht limitierenden Weiterbildung wird in dem Verdampfer 221 ein über eine Zuleitung 224 mit einer Temperatur von 4 °C zugeführter Kälteträger, beispielsweise Glykol, durch Verdampfung des in dem Kreislauf der Kälteanlage 120 umlaufenden Kältemittels, beispielsweise Ammoniaks, auf eine Temperatur von zum Beispiel -4 °C abgekühlt, mit der der Kälteträger über die Ableitung 225 zu dem zu kühlenden Objekt bzw. Medium geführt werden kann.

Das in dem Verdampfer 221 verdampfte Kältemittel wird wie durch die Pfeile dargestellt in dem Kreislauf zu einem Verdichter 222 geliefert, in dem das gasförmige Kältemittel auf einen hohen Druck verdichtet wird, wodurch die Temperatur des Kältemittels beispielhaft auf 70 °C bis 100 °C ansteigt. Das von dem Verdichter 222 verdichtete Kältemittel wird anschließend in einem Kondensator 240 kondensiert und bei hohem Druck weiter zu einer Drosseleinrichtung 223 geliefert. In dieser wird das in den Wärmeübertragern 240, 250 und 260 zum Beispiel auf -5 °C abgekühlte Kältemittel durch Expansion zum Beispiel auf -7 °C weiter abgekühlt. Insbesondere kann die Expansion direkt im Verdampfer 221 stattfinden, wobei die durch die Verdampfung des Kältemittels auftretende Verdunstungskälte das Glykol kühlt. Es versteht sich, dass die genannten Temperaturen nur beispielhaft sind und die Temperaturen von den angegebenen Temperaturen auch abweichen können.

Bei den im Stand der Technik bekannten Kondensatoren 240 wird im Allgemeinen Umgebungsluft 244 zur Kühlung des in den Kondensator eintretenden Kältemittels verwendet. Dabei sind im Stand der Technik für die hierzu eingesetzten luftgekühlten Rückkühlsysteme sowohl trockene Systeme, bei denen lediglich mit der Umgebungsluft gekühlt wird, als auch Verdunstungssysteme, bei denen zusätzlich Wasser verdunstet wird, das von der zugeführten Umgebungsluft aufgenommen wird, üblich. Bei Trockenrückkühlern ist die Grenztemperatur der Kühlung durch die Temperatur der Umgebungsluft gegeben. Die Kühlgrenztemperatur von Verdunstungssystemen ist hingegen durch die sogenannte Feuchtkugeltemperatur gegeben.

In dem in der Figur 2 dargestellten Ausführungsbeispiel wird mittels eines Ventilators 241 Umgebungsluft 244, beispielsweise mit einer Temperatur von 25 °C, bzw. einer Feuchtkugeltemperatur von 20 °C, dem als Kondensator ausgebildeten zweiten Wärmeübertrager 240 gemäß der vorliegenden Erfindung zugeführt. Anders als im Stand der Technik erfolgt jedoch eine Vorkühlung der zugeführten Umgebungsluft 244 in einem ersten Abschnitt I des zweiten Wärmeübertragers 240 mittels Bieres als Kälteträger. In der hier dargestellten, nicht limitierenden Weiterbildung wird das Bier beispielsweise mit einer Filtrations-/Lagertemperatur von 0 °C über eine Zuführeinrichtung 257, über die das Bier aus den zuvor erwähnten Gär- und/oder Lagertanks oder Drucktanks (nicht dargestellt) entnommen werden kann, ein Dreiwegeventil 258 und eine Zuleitung 259 in einer Kühlschlange 242 durch den ersten Abschnitt des zweiten Wärmeübertragers 240 geführt. Dabei findet ein Wärmeübertrag von der zugeförderten Umgebungsluft 244 auf das Bier in der Kühlschlange 242 statt, sodass das nunmehr erwärmte Bier, beispielsweise mit einer Temperatur von 20 °C, über eine Ableitung 246 aus dem Wärmeübertrager 240 austritt. Das so erwärmte Bier kann anschließend der zuvor erwähnten Abfüllanlage 180 zur Abfüllung in Gebinde 190 zugeführt werden. Alternativ kann das erwärmte Bier zu einem weiteren Wärmeübertrager (nicht dargestellt), der zwischen dem Verdichter 222 und dem zweiten Wärmeübertrager 240 im Kältemittelkreislauf der Kälteanlage angeordnet ist, geführt und dort unter Aufnahme von Wärme aus dem komprimierten Kältemittel weiter erwärmt werden. Mittels entsprechender Leitungen kann das weiter erwärmte Bier anschließend an die Abfüllanlage 180 weitergeleitet werden. Zwischen dem Dreiwegeventil 258 und dem Zulauf zur Kühlschlange 242 kann ein weiteres Dreiwegeventil (nicht dargestellt) vorgesehen sein, über das zumindest ein Teil des Bieres an dem zweiten Wärmeüberträger 240 vorbei direkt zu dem weiteren Wärmeübertrager gefördert werden kann. Dieser Bypass kann insbesondere dann verwendet werden, wenn die Umgebungsluft bereits mit ausreichend niedriger Temperatur in den Bereich I des zweiten Wärmeübertragers 240 eintritt. Mittels des weiteren Wärmeübertragers kann das heiße gasförmige Kältemittel bereits vorgekühlt werden, bevor es in den Kondensator 240 eintritt, sodass der Wärmeübertrager 240 kleiner ausgelegt werden kann bzw. die Grädigkeit und damit die Verflüssigungstemperatur sinkt.

Alternativ kann das Bier wie weiter unten beschrieben bereits vorerwärmt, beispielsweise mit einer Temperatur von 15 °C, in die Kühlschlange 242 eintreten. Auch hier findet wie oben beschrieben eine Vorkühlung der zugeführten Umgebungsluft 244 statt. In der Figur 2 wird die zugeführte Umgebungsluft 244 exemplarisch auf eine Temperatur von 15 °C vorgekühlt, wobei diese Temperatur bei Verwendung vorerwärmten Bieres etwas höher liegen kann. Auch in diesem Fall kann das weiter erwärmte Bier über die Ableitung 246 zu einer Abfüllanlage 180 gefördert werden.

Die vorgekühlte Luft 244 wird anschließend in einem zweiten Abschnitt II des zweiten Wärmeübertragers 240 zur Kühlung des Kältemittels eingesetzt. In der hier dargestellten Weiterbildung wird die Luft 244 auch im zweiten Abschnitt durch den Ventilator 241 gefördert. Das Kältemittel tritt dabei wie oben beschrieben mit einer Temperatur im Bereich von 70 °C bis 100 °C in den zweiten Abschnitt des Wärmeübertragers 240 ein, wo es durch eine Kühlschlange 243 geführt wird. Dabei gibt das Kältemittel einen Teil seiner Wärme an die vorgekühlte Umgebungsluft 244 ab, welche dadurch auf eine Temperatur im Bereich von 40 °C bis 60 °C erwärmt wird. Die so erwärmte Umgebungsluft 245 wird anschließend an die Umgebung abgefördert.

Ohne die Vorkühlung der Umgebungsluft 244 im ersten Abschnitt des zweiten Wärmeübertragers 240 ließe sich das Kältemittel, abhängig von den klimatischen oder Wetterbedingungen, lediglich auf eine Temperatur von z.B. ca. 25 °C abkühlen. Durch Vorkühlung der Umgebungsluft 244 mithilfe des Bieres als Kälteträger lässt sich jedoch die Grenztemperatur des Rücckühlsystems reduzieren. Einerseits führt die Vorkühlung durch Bier zu einer Reduzierung der Temperatur der Umgebungsluft 244 selbst, andererseits kann durch Teilkondensation der in der Umgebungsluft 244 enthaltenen Feuchtigkeit an der Kühlschlange 242 auch eine Reduzierung der Feuchtkugeltemperatur der Umgebungsluft 244 erreicht werden.

In der Praxis kann an der Kühlschlange 242 auch die Feuchtigkeit der Luft auskondensieren. Die gebildeten Tropfen werden dann vom Luftvolumenstrom nach oben mitgerissen und verdampfen anschließend wieder in Abschnitt II desWärmeübertragers 240, der sehr viel wärmer ist. In einer alternativen Ausprägung zur Darstellung der Figur 2 können die Abschnitte I und II des Wärmeübertragers 240 gedreht angeordnet sein (bei gleicher Rohrleitungsanbindung), so dass die Luft von oben nach unten durch diese beiden Abschnitte geführt wird. In dieser Anordnung begünstigt die Schwerkraft das Führen von kondensierenden Tropfen aus dem Abschnitt I zum Abschnitt II. Die mitgeführte Feuchtigkeit bringt ähnliche Vorteile wie die Wassereinspritzung bei Nasskühltürmen. Man kann somit die Effizienz des Wärmeübertragers 240 verbessern obwohl man kein zusätzliches, aufbereitetes und teures Wasser einspritzen muss. In einer weiteren Ausführungsform, kann der Abschnitt I im Schwerefeld der Erde oberhalb des Abschnitts II angeordnet sein, wodurch die auskondensierende Feuchtigkeit wieder von der Schwerkraft unterstützt dem Volumenstrom folgt. Im Nachgang kann der Luftvolumenstrom zum Wärmeübertrager 240 jedoch um bis zu 180° umgelenkt werden, wodurch die abgeführte heiße Luft am Austritt des Wärmeübertragers 240 strömungsgünstig nach oben abgeleitet wird.

Mithilfe der erfindungsgemäßen Vorkühlung kann das Kältemittel in dem zweiten Wärmeübertrager 240 wie in der Figur 2 angedeutet auf eine Temperatur von ca. 20 °C abgekühlt werden. Dabei findet der Phasenübergang zum flüssigen Kältemittel im zweiten Wärmeübertrager 240 statt. Wie in der Figur 2 dargestellt kühlt das zugeführte Bier im zweiten Wärmeübertrager 240 lediglich die Umgebungsluft 244, jedoch nicht direkt das Kältemittel. Es handelt sich bei dem zweiten Wärmeübertrager 240 somit um eine indirekte Kühlung des Kältemittels der Kälteanlage 120 mittels Bieres als Kälteträger.

Zusätzlich zu dem zweiten Wärmeübertrager 240 ist in der nicht limitierenden Weiterbildung der Figur 2 ein erster Wärmeübertrager 250 dargestellt, an dem Bier als Kälteträger zur direkten Kühlung des bereits flüssigen Kältemittels eingesetzt wird. Wie in der Figur 2 dargestellt kann dazu kaltes Bier aus den zuvor erwähnten Gär- und/oder Lagertanks oder Drucktanks 110 oder nach der Bierfiltration einer Brauerei über eine Zuleitung 251 der Zuführeinrichtung dem ersten Wärmeübertrager 250 mit einer Temperatur von 0 °C zugeführt werden. Bevorzugt im Gegenstrom wird dieser erste Wärmeübertrager 250 von dem Kältemittel durchströmt, das dabei einen Teil seiner Wärme auf das Bier überträgt. Dieses verlässt den ersten Wärmeübertrager 250 über eine Ableitung 252 beispielsweise mit einer Temperatur von 3 °C, während das Kältemittel am Ausgang des ersten Wärmeübertragers 250 auf eine Temperatur von 4 °C abgekühlt ist. Bei dem ersten Wärmeübertrager 250 kann es sich wie bereits erwähnt um einen Flüssigkeitsrekuperator handeln. Durch die Kombination von dem zweiten Wärmeübertrager 240, in dem das Kältemittel in einem ersten Schritt auf eine Temperatur von 20 °C abgekühlt wird, und dem ersten Wärmeübertrager 250, in dem das Kältemittel weiter auf eine Temperatur von 4 °C abgekühlt wird, ergibt sich somit ein zweistufiges Kühlsystem für das Kältemittel, in dem gleichzeitig eine zweistufige Erwärmung des Bieres auf eine Abfülltemperatur stattfindet.

Das in dem ersten Wärmeübertrager 250 erwärmte Bier kann zusätzlich zur Eiswassererzeugung in einem dritten Wärmeübertrager 255 eingesetzt werden. Dabei wird gemäß der dargestellten Weiterbildung das auf 3 °C erwärmte Bier über die Zuleitung 252 in den dritten Wärmeübertrager 255 eingebracht, wo es im Gegenstrom zu Kaltwasser, das über die Zuleitung 263 in den dritten Wärmeübertrager eintritt, geführt wird. Dabei wird das Kaltwasser, das beispielsweise mit einer Temperatur von 20 °C in den dritten Wärmeübertrager 255 eintritt, in Eiswasser umgewandelt, das den dritten Wärmeübertrager beispielsweise mit einer Temperatur von 7 °C über eine Ableitung 264 verlässt. Das so erzeugte Eiswasser kann wie oben erwähnt zu weiteren Kühlzwecken in der Brauerei eingesetzt werden und insbesondere einem Eiswassersystem oder Eiswassertank (nicht dargestellt) zugeführt werden. Das im Gegenzug auf ca. 15 °C erwärmte Bier kann über die Ableitung 253 aus dem dritten Wärmeübertrager 255 austreten.

Insbesondere kann Eiswasser bereit gestellt werden, welches in der Würzekühlung benötigt wird, um im Würzekühler die Würze zu kühlen. Bevorzugt erfolgt dies in einem zweistufigen Würzekühler in der zweiten Stufe. Bei einem zweistufigen Würzekühler kann in der ersten Stufe mit einem Wärmeträger in einem geschlossenen Wärmeträgerkreislauf die Würze auf etwa 85 °C gekühlt werden. Der im Wärmetausch erwärmte Wärmeträger kann dann wiederum Wärmeverbraucher (zum Beispiel ein Maischegefäß oder einen Läuterwürzeerhitzer) mit Wärme zu versorgen. In der zweiten Stufe des Würzekühlers wird Eiswasser verwendet, um die Würze weiter zu kühlen. Das so erwärmte Eiswasser wird dann zur Warmwasserversorgung in der Brauerei für Brau- und Reinigungszwecke eingesetzt.

Von dem dritten Wärmeübertrager 255 wird das so erwärmte Bier zu einem Dreiwegeventil 254 geführt, von dem es entweder über eine Ableitung 256 zur Abfüllanlage 180 der Brauerei gefördert werden kann, oder über eine weitere Leitung 265 zu dem oben beschriebenen Dreiwegeventil 258 geliefert werden kann. Möglich ist auch, dass das Dreiwegeventil 254 den Biervolumenstrom dahingehend aufteilt, dass ein Teil des Biervolumenstromes zur Abfüllanlage 180 der Brauerei und der andere Teil dem Dreiwegeventil 258 zugeführt wird. Wie erwähnt können die Dreiwegeventile 254 und 258 von einer Steuer- und/oder Regeleinheit (nicht dargestellt) gesteuert werden. Dies kann insbesondere in Abhängigkeit von einer Temperatur der Umgebungsluft 244, einem benötigten Kältestrom am zweiten Wärmeübertrager 240 und einer Temperatur des Bieres nach Durchgang durch den dritten Wärmeübertrager 255 erfolgen. Insbesondere kann wie oben beschrieben bei Vorliegen von Umgebungsluft 244 unterhalb einer Grenztemperatur, beispielsweise 15 °C, das im dritten Wärmeübertrager 255 erwärmte Bier unmittelbar zur Abfüllung 180 gefördert werden, da eine Vorkühlung der Umgebungsluft 244 im ersten Abschnitt des zweiten Wärmeübertragers 240 nicht benötigt wird. Ebenso kann das im dritten Wärmeübertrager 255 erwärmte Bier unmittelbar zur Abfüllung 180 gefördert werden, wenn die Temperatur der Umgebungsluft 244 eine zweite Grenztemperatur, beispielsweise 35 °C, überschreitet, die es erforderlich macht, die Umgebungsluft 244 mit Bier bei Filtrations-/Lagertemperatur vorzukühlen. In diesem Fall wird über das Dreiwegeventil 258 kaltes Bier mit Filtrations-/Lagertemperatur in den ersten Abschnitt des zweiten Wärmeübertragers 240 gefördert. Die zur Regelung erforderlichen Temperatursonden und Durchflussmesser sind in der Figur nicht dargestellt.

Anstelle der erwähnten Dreiwegeventile können selbstverständlich auch andere Klappen und Ventile, welche den gleichen Zweck erfüllen, verwendet werden.

Gemäß der in der Figur 2 dargestellten, nicht limitierenden Weiterbildung ist zusätzlich ein vierter Wärmeübertrager 260 im Kältemittelkreislauf vorgesehen, an dem mittels Zufuhr von flüssigem Kohlendioxid bei einer Temperatur von -25 °C über eine Zuleitung 261 eine weitere Abkühlung des Kältemittels von 4 °C auf beispielsweise -5 °C erfolgt. Bei dem vierten Wärmeübertrager 260 kann es sich insbesondere um einen Verdampfer handeln, in dem das zugeführte flüssige Kohlendioxid verdampft wird. Das nunmehr gasförmige Kohlendioxid wird über eine Ableitung 262 der weiteren Verwendung, beispielsweise in einem Karbonisierer, zugeführt. Die Zuleitung 261 kann beispielsweise eine Verflüssigungsanlage oder einen Speicher für flüssiges Kohlendioxid (nicht dargestellt) mit dem vierten Wärmeübertrager 260 verbinden. Das somit auf -5 °C abgekühlte Kältemittel wird anschließend der Drosseleinrichtung 223 zugeführt, von der aus es in den Verdampfer 221 eintritt.

Bei der in der Figur 2 dargestellten, nicht limitierenden Weiterbildung handelt es sich somit um ein dreistufiges Kühlsystem für das Kältemittel, wobei die in gelagertem Bier und Kohlendioxid gespeicherte Kühlkapazität zur Verbesserung der Effizienz der Kälteanlage 120 verwendet wird. Darüber hinaus wird die in flüssigem Kohlendioxid gespeicherte Kälte ebenfalls eingesetzt, um die Effizienz der Kälteanlage zu verbessern. Außerdem ist eine Verdampfung des flüssigen Kohlendioxids zur weiteren Verwendung in der Brauerei im Allgemeinen erforderlich. Die dargestellte Weiterbildung trägt somit zur Reduzierung der in einer Kälteanlage von Brauereien erforderlichen (elektrischen) Energie bei und steigert damit die Kosteneffizienz der gesamten Brauerei.

In den obigen Ausführungen werden Drucktanks erwähnt. Unter Drucktanks sind allgemein Tanks zu verstehen welche als Puffer-/Speichertanks für das abzufüllende Bier dienen. Es ist auch denkbar, dass es sich bei diesen Drucktanks 110 alternativ um sogenannte Gär- und/oder Lagertanks 110 handelt. Wenn vor der Abfüllung das Bier nicht filtriert wird, kann dieses auch direkt aus dem Gär- und/oder Lagertank 110 der Kälteanlage 120 zugeführt werden.

Um Eiswasser mit einer möglichst niedrigen Temperatur zu erzeugen, kann es sinnvoll sein, dass Bier aus einem Gär- und/oder Lagertank oder einem Drucktank als Kälteträger bzw. Kälteträgermedium zuerst dem dritten Wärmeübertrager 255 zugeführt wird und dann dem zweiten Wärmeübertrager 240.

Wenn das Bier filtriert wird, so kann das kalte Bier seine gespeicherte Kühlkapazität direkt oder indirekt, um die beschriebenen Vorteile zu erreichen, abgegeben werden.

## Patentansprüche

1. Verfahren zum Betrieb einer Kälteanlage (120) in einer Brauerei, umfassend:
Fördern eines Kältemittels in einem Kreislauf der Kälteanlage (120) mit einem Verdampfer (221) zum Verdampfen des Kältemittels und wenigstens einem Wärmeübertrager (240, 250) zum Kühlen des Kältemittels,
**dadurch gekennzeichnet, dass**
Bier, das in wenigstens einem Drucktank oder Gär und/oder Lagertank (110) gelagert wird, oder Bier nach der Bierfiltration als Kälteträger beim Kühlen des Kältemittels eingesetzt wird.

2. Verfahren nach Anspruch 1, das weiterhin das Fördern von Bier als Kälteträger aus wenigstens einem Drucktank oder Gär- und/oder Lagertank (110) der Brauerei zu dem wenigstens einen Wärmeübertrager (240, 250) umfasst.

3. Verfahren nach Anspruch 1 oder 2, wobei das Bier an dem wenigstens einen Wärmeübertrager (240, 250) direkt und/oder indirekt das Kältemittel kühlt.

4. Verfahren nach Anspruch 3, wobei das Bier an dem wenigstens einen Wärmeübertrager (240) zugeführte Umgebungsluft (244) vorkühlt, und
wobei die vorgekühlte Umgebungsluft an dem wenigstens einen Wärmeübertrager (240) das Kältemittel kühlt.

5. Verfahren nach Anspruch 4, wobei dasselbe Bier erst zur direkten Kühlung des Kältemittels an einem ersten Wärmeübertrager (250) und anschließend zur Vorkühlung der Umgebungsluft (244) an einem zweiten Wärmeübertrager (240) eingesetzt wird.

6. Verfahren nach einem der vorhergehenden Ansprüche, das zusätzlich eine Kühlung des Kältemittels mittels Kohlendioxids nach der Kühlung des Kältemittels mittels des Bieres umfasst.

7. Verfahren nach einem der Ansprüche 3 bis 6, wobei das Bier, insbesondere nach der direkten Kühlung des Kältemittels, zur Eiswassererzeugung aus Kaltwasser an einem dritten Wärmeübertrager (255) eingesetzt wird.

8. Verfahren nach Anspruch 7, wobei das Bier nach Durchgang durch den dritten Wärmeübertrager (255) zur indirekten Kühlung des Kältemittels verwendet wird.

9. Verfahren nach einem der vorhergehenden Ansprüche, das weiterhin ein Abfüllen (180) des Bieres in Behälter (190) nach Durchgang durch die Kälteanlage (120) bei einer Temperatur von höchstens 35 °C, bevorzugt höchstens 30 °C umfasst.

10. Kälteanlage (120) zum Einsatz in einer Brauerei, umfassend:
einen Verdampfer (221) zum Verdampfen des Kältemittels, und
wenigstens einen Wärmeübertrager (240, 250) zum Kühlen des Kältemittels,
**gekennzeichnet durch**
eine Zuführeinrichtung (130) für Bier, das in wenigstens einem Drucktank oder Gär und/oder Lagertank (110) gelagert wird, oder für Bier nach der Bierfiltration zu dem wenigstens einen Wärmeübertrager (240, 250),
wobei die Zuführeinrichtung (130) und der wenigstens eine Wärmeübertrager (240, 250) derart ausgebildet sind, dass das Bier als Kälteträger beim Kühlen des Kältemittels eingesetzt wird.

11. Kälteanlage nach Anspruch 10, wobei der wenigstens eine Wärmeübertrager einen ersten Wärmeübertrager (250), der für einen direkten Wärmeaustausch zwischen dem Kältemittel und dem Bier ausgebildet ist, und/oder einen zweiten Wärmeübertrager (240) umfasst, der dazu ausgebildet ist, zugeführte Umgebungsluft (244) mit dem Bier als Kälteträger vorzukühlen und das Kältemittel mit der vorgekühlten Umgebungsluft (244) zu kühlen.

12. Kälteanlage nach Anspruch 11, wobei die Zuführeinrichtung (130) derart ausgebildet ist, dass das zugeführte Bier erst den ersten Wärmeübertrager (250) und anschließend den zweiten Wärmeübertrager (240) durchströmt.

13. Kälteanlage nach Anspruch 11 oder 12, die weiterhin einen dritten Wärmeübertrager (255), insbesondere bzgl. der Strömung des Bieres zwischen dem ersten und dem zweiten Wärmeübertrager (250, 240), umfasst, der dazu ausgebildet ist, zugeführtes Kaltwasser durch Wärmeübertragung auf das Bier in Eiswasser umzuwandeln.

14. Kälteanlage nach einem der Ansprüche 10 bis 13, die weiterhin einen vierten Wärmeübertrager (260), insbesondere stromabwärts von dem ersten Wärmeübertrager (250), umfasst, der dazu ausgebildet ist, das Kältemittel mittels zugeführten Kohlendioxids zu kühlen.

15. Verwendung von in wenigstens einem Drucktank oder Gär- und/oder Lagertank (110) gelagertem Bier oder von Bier nach der Bierfiltration zur Kühlung eines Kältemittels einer Kälteanlage (120) nach einem der Ansprüche 10 bis 14.

## Claims

1. A method for operating a refrigeration system (120) in a brewery comprising:
conveying a refrigerant in a circuit of the refrigeration system (120) with an evaporator (221) for evaporating the refrigerant and at least one heat exchanger (240, 250) for cooling the refrigerant,
**characterised in that**
beer which is stored in at least one pressure tank or fermentation and/or storage tank (110) or beer after beer filtration is used as a coolant during cooling of the refrigerant.

2. The method according to claim 1, further comprising conveying beer as a coolant from at least one pressure tank or fermentation and/or storage tank (110) of the brewery to the at least one heat exchanger (240, 250).

3. The method according to claim 1 or 2, wherein the beer directly and/or indirectly cools the refrigerant at the at least one heat exchanger (240, 250).

4. The method according to claim 3, wherein the beer pre-cools supplied ambient air (244) at the at least one heat exchanger (240), and
wherein the pre-cooled ambient air cools the refrigerant at the at least one heat exchanger (240).

5. The method according to claim 4, wherein the same beer is used first for direct cooling of the refrigerant at a first heat exchanger (250) and subsequently for pre-cooling the ambient air (244) at a second heat exchanger (240).

6. The method according to any one of the preceding claims, further comprising cooling the refrigerant by means of carbon dioxide after cooling the refrigerant by means of the beer.

7. The method according to any one of claims 3 to 6, wherein, in particular after direct cooling of the refrigerant, the beer is used to produce ice water from cold water at a third heat exchanger (255).

8. The method according to claim 7, wherein the beer is used for indirect cooling of the refrigerant after passing through the third heat exchanger (255).

9. The method according to any one of the preceding claims, further comprising filling (180) the beer into containers (190) at a temperature of at most 35°C, preferably at most 30°C, after passing through the refrigeration system (120).

10. A refrigeration system (120) for use in a brewery, comprising:
an evaporator (221) for evaporating the refrigerant, and
at least one heat exchanger (240, 250) for cooling the refrigerant,
**characterised by**
a supply unit (130) for beer which is stored in at least one pressure tank or fermentation and/or storage tank (110), or for beer after beer filtration to the at least one heat exchanger (240, 250),
wherein the supply unit (130) and the at least one heat exchanger (240, 250) are designed such that the beer is used as a coolant during cooling of the refrigerant.

11. The refrigeration system according to claim 10, wherein the at least one heat exchanger comprises a first heat exchanger (250), which is designed for direct heat exchange between the refrigerant and the beer, and/or a second heat exchanger (240), which is designed for pre-cooling supplied ambient air (244) with the beer as a coolant and for cooling the refrigerant with the pre-cooled ambient air (244).

12. The refrigeration system according to claim 11, wherein the supply unit (130) is configured in such a way that the supplied beer flows first through the first heat exchanger (250) and subsequently through the second heat exchanger (240).

13. The refrigeration system according to claim 11 or 12, further comprising a third heat exchanger (255), in particular in relation to the flow of beer between the first and the second heat exchanger (250, 240), which is designed to convert supplied cold water to ice water by heat transfer to the beer.

14. The refrigeration system according to any one of claims 10 to 13, further comprising a fourth heat exchanger (260), in particular downstream of the first heat exchanger (250), which is designed to cool the refrigerant by means of supplied carbon dioxide.

15. A use of beer stored in at least one pressure tank or fermentation and/or storage tank (110), or of beer after beer filtration for cooling a refrigerant of a refrigeration system (120) according to any one of claims 10 to 14.

## Revendications

1. Procédé permettant de faire fonctionner une installation de réfrigération (120) au sein d'une brasserie, comprenant l'étape consistant à :
acheminer un réfrigérant dans un circuit de l'installation de réfrigération (120) comprenant un évaporateur (221) permettant d'évaporer le réfrigérant et au moins un échangeur de chaleur (240, 250) permettant de refroidir le réfrigérant,
**caractérisé en ce que**
de la bière stockée dans au moins une cuve sous pression ou une cuve de fermentation et/ou de stockage (110) ou de la bière issue de la filtration est utilisée comme fluide frigorifique lors du refroidissement du réfrigérant.

2. Procédé selon la revendication 1, comprenant en outre une étape consistant à acheminer de la bière faisant office de fluide frigorifique depuis au moins une cuve sous pression ou une cuve de fermentation et/ou de stockage (110) de la brasserie vers le au moins un échangeur de chaleur (240, 250).

3. Procédé selon la revendication 1 ou 2, dans lequel la bière refroidit directement et/ou indirectement le réfrigérant au niveau du au moins un échangeur de chaleur (240, 250).

4. Procédé selon la revendication 3, dans lequel la bière pré-refroidit de l'air ambiant (244) fourni au niveau du au moins un échangeur de chaleur (240), et
dans lequel l'air ambiant pré-refroidi refroidit le réfrigérant au niveau du au moins un échangeur de chaleur (240).

5. Procédé selon la revendication 4, dans lequel la même bière est d'abord utilisée pour refroidir directement le réfrigérant au niveau d'un premier échangeur de chaleur (250), et est ensuite utilisée pour pré-refroidir l'air ambiant (244) au niveau d'un deuxième échangeur de chaleur (240).

6. Procédé selon l'une quelconque des revendications précédentes, comprenant en outre une étape consistant à refroidir le réfrigérant au moyen de dioxyde de carbone après refroidissement du réfrigérant au moyen de la bière.

7. Procédé selon l'une quelconque des revendications 3 à 6, dans lequel la bière est utilisée, en particulier après le refroidissement direct du réfrigérant, pour produire de l'eau glacée à partir d'eau froide au niveau d'un troisième échangeur de chaleur (255).

8. Procédé selon la revendication 7, dans lequel la bière est utilisée pour refroidir indirectement le réfrigérant après passage à travers le troisième échangeur de chaleur (255).

9. Procédé selon l'une quelconque des revendications précédentes, comprenant en outre une étape d'embouteillage (180) de la bière dans des récipients (190) après passage à travers l'installation de réfrigération (120) à une température d'au plus 35°C, de manière préférée d'au plus 30°C.

10. Installation de réfrigération (120) destinée à être utilisée dans une brasserie, comprenant :
un évaporateur (221) permettant d'évaporer le réfrigérant, et
au moins un échangeur de chaleur (240, 250) permettant de refroidir le réfrigérant,
**caractérisée par**
un dispositif de fourniture (130) destiné à de la bière stockée dans au moins une cuve sous pression ou une cuve de fermentation et/ou de stockage (110), ou à de la bière issue de la filtration, et menant jusqu'au au moins un échangeur de chaleur (240, 250),
dans laquelle le dispositif de fourniture (130) et le au moins un échangeur de chaleur (240, 250) sont conçus de telle manière que la bière est utilisée comme fluide frigorifique lors du refroidissement du réfrigérant.

11. Installation de réfrigération selon la revendication 10, dans laquelle le au moins un échangeur de chaleur comprend un premier échangeur de chaleur (250), conçu pour un échange de chaleur direct entre le réfrigérant et la bière, et/ou un deuxième échangeur de chaleur (240) conçu pour pré-refroidir l'air ambiant (244) fourni avec la bière faisant office de fluide frigorifique et pour refroidir le réfrigérant avec l'air ambiant (244) pré-refroidi.

12. Installation de réfrigération selon la revendication 11, dans laquelle le dispositif de fourniture (130) est conçu de telle manière que la bière fournie parcourt d'abord le premier échangeur de chaleur (250), puis le deuxième échangeur de chaleur (240).

13. Installation de réfrigération selon la revendication 11 ou 12, comprenant en outre un troisième échangeur de chaleur (255), en particulier s'agissant de la circulation de la bière entre les premier et deuxième échangeurs de chaleur (250, 240), qui est conçu pour convertir l'eau froide fournie en eau glacée par transfert de chaleur à la bière.

14. Installation de réfrigération selon l'une quelconque des revendications 10 à 13, comprenant en outre un quatrième échangeur de chaleur (260), en particulier en aval du premier échangeur de chaleur (250), conçu pour refroidir le réfrigérant au moyen de dioxyde de carbone fourni.

15. Utilisation de bière stockée dans au moins une cuve sous pression ou une cuve de fermentation et/ou de stockage (110) ou de bière issue de la filtration pour refroidir un réfrigérant d'une installation de réfrigération (120) selon l'une quelconque des revendications 10 à 14.
